**Europäisches Patentamt**

**European Patent Office**

**Office européen des brevets**

(11) Veröffentlichungsnummer: **0 170 007**
**B1**

# EUROPÄISCHE PATENTSCHRIFT

(45) Veröffentlichungstag der Patentschrift:
**12.10.88**

(51) Int. Cl.⁴: **F 16 K 15/14**

(21) Anmeldenummer: **85106983.1**

(22) Anmeldetag: **05.06.85**

---

(54) **Rückschlagventil.**

---

(30) Priorität: **28.07.84 DE 8422552 U**

(43) Veröffentlichungstag der Anmeldung:
**05.02.86 Patentblatt 86/6**

(45) Bekanntmachung des Hinweises auf die Patenterteilung:
**12.10.88 Patentblatt 88/41**

(84) Benannte Vertragsstaaten:
**AT DE FR GB IT SE**

(56) Entgegenhaltungen:
**EP-A-0 059 558**
**DE-B-2 315 870**
**US-A-3 037 522**
**US-A-3 633 613**
**US-A-3 889 710**
**US-A-3 905 386**

(73) Patentinhaber: **Walter Alfmeier GmbH + Co
Präzisions- Baugruppenelemente, Industriestrasse
5, D-8830 Treuchtlingen (DE)**

(72) Erfinder: **Hofmann, Heinz A., Ludwig- Thoma-
Strasse 28, D-8830 Treuchtlingen (DE)**

(74) Vertreter: **Tergau, Enno, Hefnersplatz 3 Postfach
11 93 47, D-8500 Nürnberg 11 (DE)**

---

## Beschreibung

Die Erfindung betrifft ein Rückschlagventil der im Oberbegriff des Anspruches 1 beschriebenen Art.

Rückschlagventile (beispielsweise aus DE-B-2 315 870 bekannt) für den Einsatz in unterdruckbetriebenen Servoaggregaten in Kraftfahrzeugen bestehen im wesentlichen aus drei Teilen: Einem Gehäuseteil, einem Ventilkörper und einem Kappenteil. Das Gehäuseteil weist einen Strömungseintrittsstutzen, Strömungsdurchtrittsöffnungen, eine diese umgebende, ringförmige Dichtkante und einen Ventilkörper-Haltezapfen auf. Auf diesen Haltezapfen ist als Ventilkörper eine kreisrunde, aus einem weichelastischen Material bestehende Dichtscheibe aufgesetzt, die dadurch mittig am Gehäuseteil fixiert ist. Ein Abrutschen dieser Dichtscheibe vom Haltezapfen wird durch einen vorzugsweise einstückig an das Kappenteil angeformten Gegenhalter verhindert, der in seiner Verbindungsendstellung mit dem Kappenteil diese Dichtscheibe an ihrem inneren Bereich beaufschlagt. Wird am Strömungsaustrittsstutzen des ebenfalls mit Strömungsdurchtrittsöffnungen versehenen Kappenteils durch den Verbrennungsmotor eines Kraftfahrzeuges ein Ansaugunterdruck erzeugt, hebt die Dichtscheibe mit ihrem Umfangsbereich von der Dichtkante ab und gibt den Strömungsweg frei, sie bleibt dabei aber mit ihrem Zentralbereich in der durch Haltezapfen und Gegenhalter festgelegten Ausgangsposition.

Diese bisher verwendeten Ventile wurden jeweils am höchsten Punkt zwischen Verbrennungsmotor und Servoaggregat eines Kraftfahrzeugs eingebaut. Damit wurde sichergestellt, daß eventuell vorhandener Kraftstoff in der Bremsleitung bei pulsierendem Unterdruck nicht in das Rückschlagventil gelangen konnte. Durch die flachere Bauweise des Motorraums und durch Einsatz neuentwickelter Verbrennungsmotoren muß allerdings in vielen Fällen die Einbaulage der Servoaggregate zur Bodenseite hin verlegt werden. Dadurch ist ein schwerkraftbedingtes Fernhalten von Kraftstoff von diesen Rückschlagventilen nicht mehr voll gewährleisten. Dies kann insbesondere bei minderwertigen Kraftstoffen eine Beschädigung der Dichtscheibe z. B. durch ein Quellen des weichelastischen Werkstoffes bewirken. Damit kann sich unter anderem die Innenbohrung der Dichtscheibe vergrößern, die dann vom Verbrennungsmotor angesaugt über den Gegenhalter rutscht und die Durchtrittsöffnungen im dem Gehäuseteil gegenüberliegenden Kappenteil strömungsdicht verschließt. Dadurch kann auf der Servoaggregatseite des Ventiles kein Unterdruck mehr erzeugt werden, was zu einem sofortigen Totalausfall dieses Bauteils- im Falle eines Bremskraftverstärkers der Bremsanlageführt.

Eine Verwendung beispielsweise von kraftstoffresistenten Fluorsilikonen als Werkstoff für die Dichtscheibe scheidet wegen der hohen Materialkosten aus wirtschaftlichen Gründen aus. Genausowenig kommt eine Durchmesservergrößerung des Gegenhalters in Frage, da dessen äußere Abmessungen wegen der für eine einwandfreie Ventilfunktion benotigten Vorspannung und wegen des erforderlichen Freiraumes für die Bewegung der Dichtscheibe fest vorgegeben sind. Ein derartiges Ventil mit verbreitertem Gegenhalter ist aus US-A-3 905 386 entsprechend den Merkmalen gemäß dem Oberbegriff von Anspruch 1 bekannt. Dessen Dichtscheibe kann sich nur in einem außenliegenden Ringbereich durchbiegen, dessen Breite etwa der Hälfte des Gesamtdurchmessers der Scheibe entspricht. Zusätzlich besteht der Gegenhalter aus im Querschnitt etwa kreissektorförmigen Fingern, die zwischen sich Strömungsdurchtritts öffnungen bilden.

Der Erfindung liegt die Aufgabe zugrunde, ein Rückschlagventil der eingangs genannten Art so auszubilden, daß auf wirtschaftliche und baulich einfache Weise eine betriebssichere Ausführung dieser Ventile erreicht wird, d.h. insbesondere, daß ein Abrutschen der Dichtscheibe vom Haltezapfen und über den Gegenhalter zuverlässig verhindert wird, ohne den Strömungsquerschnitt zu beeinträchtigen.

Diese Aufgabe wird durch die kennzeichnenden Merkmale des Anspruches 1 gelöst. Durch die radial nach außen verlaufenden Rippen wird die Dichtscheibe daran gehindert, nach einem eventuellen Aufquellen unbegrenzt in Strömungsrichtung über den Gegenhalter zu gleiten und die Durchtrittsöffnungen im Kappenteil zu verschließen. Damit ist jederzeit gewährleistet, daß bei laufendem Verbrennungsmotor das Servoaggregat evakuiert werden kann. Auch aus etwaigen anderen Gründen kann sich dadurch die Dichtscheibe nicht mehr auf die Durchtrittsöffnungen im Kappenteil auflegen. Auch ist ein großflächiger Strömungsquerschnitt durch die erfindungsgemäße Konstruktion gewährleistet.

Durch eine Ausführung des Rückschlagventils entsprechend dem kennzeichnenden Merkmal des Anspruches 2 werden die Rippen unempfindlich gegen mechanische Überbeanspruchung. Ein Brechen, Abknicken od.dgl. wird vermieden.

Eine vorteilhafte Bauweise wird durch das Kennzeichnungsmerkmal des Anspruches 3 vorgeschlagen, da durch die einstückige Fertigung von Kappenteil, Gegenhalter und Rippen eine mechanisch stabile und einfach zu montierende Baueinheit geschaffen wird.

Das kennzeichnende Merkmal des Anspruches 4 beschreibt eine praxisgerechte Ausführung der Rippen, denn durch den Winkel von etwa 15° wird sowohl ein genügend großer Freiraum für den Strömungsquerschnitt erzielt, als auch eine geringere Materialermüdung durch Anlage der Dichtscheibe an die strömungsseitigen Rippenkanten erreicht.

Die Erfindung wird im folgenden an Hand der Zeichnungen beispielsweise erläutert. Es zeigen:

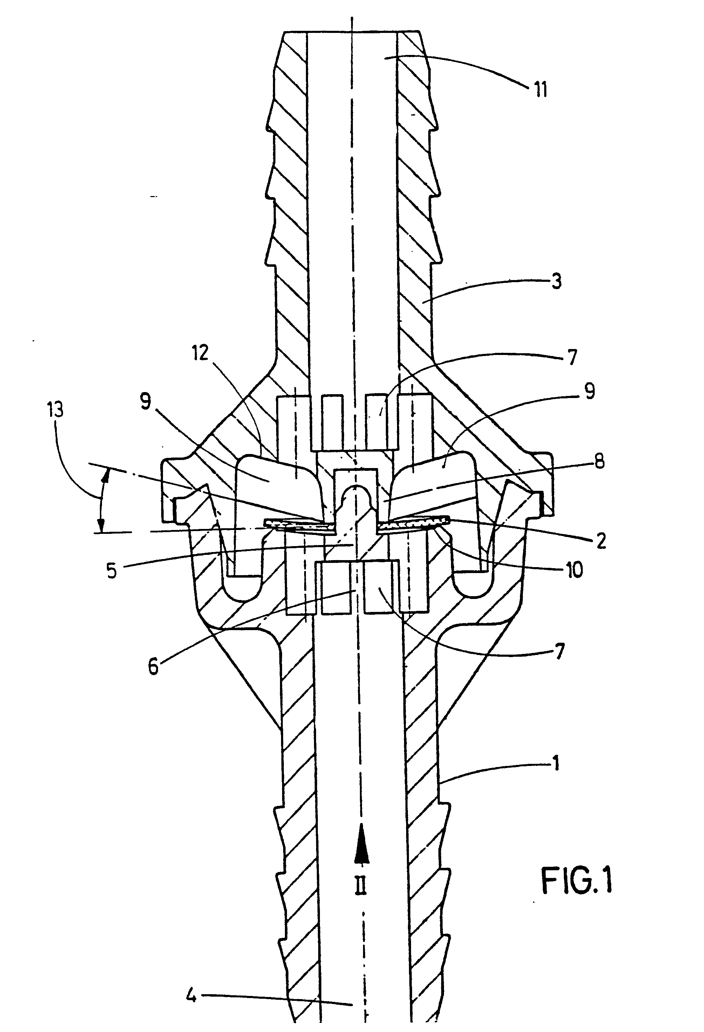

Fig. 1 einen Längsschnitt durch ein Rückschlagventil der erfindungsgemäßen Art,

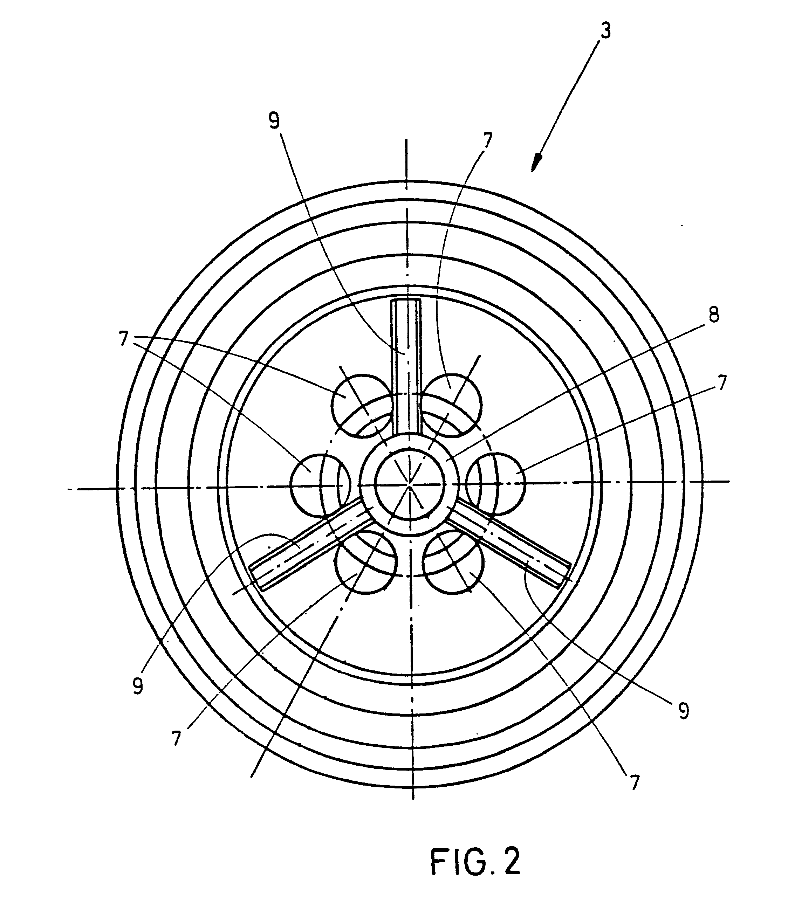

Fig. 2 eine Draufsicht auf das gehäuseteilseitige Ende eines Kappenteils eines erfindungsgemäß ausgestalteten Rückschlagventils in Richtung des Pfeiles II in Fig. 1.

Das Rückschlagventil besteht aus einem Gehäuseteil 1, einer Dichtscheibe 2 und einem Kappenteil 3. Dabei ist das Gehäuseteil 1 im wesentlichen rotationssymmetrisch und weist zum Anschluß von Saugschläuchen einen Strömungseintrittsstutzen 4 auf. Zur Halterung der Dichtscheibe 2 besitzt es einen Haltezapfen 5, der über Stege 6 mit dem restlichen Gehäuseteil 1 verbunden ist. Durchtrittsöffnungen 7 gewährleisten einen genügenden Strömungsquerschnitt. Der Haltezapfen 5 durchgreift ein zentrales Durchgangsloch der Dichtscheibe 2, die auf diesen aufgesetzt ist. In das Kappenteil 3 sind einstückig ein Gegenhalter 8 und Rippen 9 eingeformt. Das Kappenteil 3 ist mit dem Gehäuseteil 1 fest verbunden, dabei drückt der Gegenhalter 8 die Dichtscheibe 2 gegen den Haltezapfen 5 und setzt diese unter eine definierte Vorspannung. Dadurch wird in Rückschlagstellung die Dichtfunktion unterstützt, die auf das Anlegen der Dichtscheibe 2 an eine ringförmig umlaufende Dichtkante 10 beruht. Die Rippen 9 begrenzen den Freiraum der Dichtscheibe 2 und verhindern deren übergleiten über den Gegenhalter 8 bei Aufquellen durch Benzineintritt in das Rückschlagventil. Dadurch ist selbst bei einem Aufquellen des Dichtscheibenloches ein freier Strömungsdurchlauf zwischen Strömungseintrittsstutzen 4 und Strömungsaustrittsstutzen 11 ständig gesichert.

## Patentansprüche

1. Rückschlagventil, insbesondere für unterdruckbetriebene Servoaggregate in Kraftfahrzeugen, mit
- einem mit einem Strömungseintrittsstutzen (4), Strömungsdurchtrittsöffnungen (7), einer Dichtkante (10) und einem Ventilkörperhaltezapfen (5) versehenen Gehäuseteil (1),
- einem gelochten scheiben- oder schirmförmigen, auf den Haltezapfen (5) aufgesetzten, weichelastischen Ventilkörper (Dichtscheibe 2),
- einem ebenfalls mit Strömungsdurchtrittsöffnungen (7) und einem Strömungsaustrittsstutzen (11) versehenen Kappenteil (3) und

- einem den Ventilkörper (Dichtscheibe 2) in seinem den Haltezapfen (5) umgebenden Bereich beaufschlagenden und mit dem Kappenteil verbundenen Gegenhalter (8), wodurch im Betrieb zum äußeren Bereich der Dichtscheibe hin ein Freiraum gebildet wird,
dadurch gekennzeichnet,
daß der Gegenhalter (8) den inneren Bereich der gelochten Dichtscheibe voll beaufschlagt und den Freiraum der Dichtscheibe (2) in Strömungsrichtung begrenzende, außerhalb des Beaufschlagungsbereiches des Gegenhalters (8) radial nach außen verlaufende Rippen (9) aufweist.

2. Rückschlagventil nach Anspruch 1, dadurch gekennzeichnet, daß die Rippen (9) bis zur Innenfläche des umgebenden Kappenteils (3) verlaufen und sich mit ihrer saug- bzw. strömungsabseitigen Kante auf einen im wesentlichen senkrecht zur Strömungsrichtung umlaufenden Absatz (12) im Kappenteil (3) abstützen.

3. Rückschlagventil nach Anspruch 1 oder 2, dadurch gekennzeichnet, daß das Kappenteil (3), der Gegenhalter (8) und die Rippen (9) einstückig aus einem einheitlichen Werkstoff - insbesondere einem Kunststoff - gefertigt sind.

4. Rückschlagventil nach einem der Ansprüche 1 bis 3, dadurch gekennzeichnet, daß die strömungsseitigen Kanten der Rippen (9) mit der von der Dichtkante (10) aufgespannten Ebene einen spitzen Winkel (13) von etwa 15° bilden.

## Claims

1. Non-return valve, especially for vacuum-operated booster units in motor vehicles, having
- a housing part (1) equipped with a flow inlet connection (4), flow passage orifices (7), a sealing edge (10) and a valve-body retention pin (5),
- a perforated disc-shaped or umbrella-shaped soft-elastic valve body (sealing disc 2) placed onto the retention pin (5),
- a cap part (3) likewise equipped with flow passage orifices (7) and a flow outlet connection (11), and
- an abutment (8) which subjects the valve body (sealing disc 2) to stress in its region surrounding the retention pin (5) and which is connected to the cap part, with the result that, during operation, a free space is formed towards the outer region of the sealing disc,
characterized in that
the abutment (8) subjects the inner region of the perforated sealing disc fully to stress and has ribs (9) limiting the free space of the sealing disc (2) in the direction of flow and extending radially outwards outside the stress-exerting region of the abutment (8).

2. Non-return valve according to Claim 1, characterized in that the ribs (9) extend up to the inner face of the surrounding cap part (3) and are supported with their edge facing away from the suction or flow side on a step (12) in the cap part (3) extending around essentially perpendicularly relative to the direction of flow.

3. Non-return valve according to Claim 1 or 2, characterized in that the cap part (3), the abutment (8) and the ribs (9) are produced in one piece from a uniform material, especially a plastic.

4. Non-return valve according to one of Claims 1 to 3, characterized in that the edges of the ribs (9) facing the flow form an acute angle (13) of approximately 15° with the plane fixed by the sealing edge (10).

**Revendications**

1. Clapet antiretour, en particulier pour servomécanismes fonctionnant par dépression dans les véhicules motorisés, comportant

- un boitier (1) comprenant une tubulure d'entrée d'écoulement (4), des ouvertures de passage d'écoulement (7), une arête d'étanchéité (10) et un téton (5) support de l'obturateur,

- un obturateur (rondelle d'étanchéité (2)) en forme de disque ou d'écran perforé, posé sur le téton support (5) et à élasticité douce,

- un capuchon (3) qui présente également des ouvertures de passage de l'écoulement (7) et une tubulure de sortie de l'écoulement (11), ainsi que

- un contre-support (8) qui contraint l'obturateur (rondelle d'étanchéité (2)) dans sa zone entourant le téton support (5) et qui est relié au capuchon, de sorte qu'en exploitation, un espace de liberté se forme en direction de la zone extérieure de la rondelle d'étanchéité, caractérisé

en ce que le contre-support (8) contraint complètement la zone intérieure de la rondelle d'étanchéité perforée et présente des nervures (9) qui sont dirigées radialement vers l'extérieur, à l'extérieur de la zone de contrainte du contre-support (8), et qui limitent l'espace de liberté de la rondelle d'étanchéité (2) dans la direction de l'écoulement.

2. Clapet antiretour selon la revendication 1, caractérisé

en ce que les nervures (9) s'étendent jusqu'à la surface intérieure du capuchon (3) qui entoure le clapet et, par leur arête côté admission et écoulement, s'appuient sur un décrochement périphérique (12) du capuchon (3) sensiblement perpendiculaire à la direction de l'écoulement.

3. Clapet antiretour selon la revendication 1 ou 2, caractérisé

en ce que le capuchon (3), le contre-support (8) et les nervures (9) sont fabriqués d'une seule pièce en un matériau homogène - en particulier en un plastique.

4. Clapet antiretour selon l'une des revendications 1 à 3, caractérisé

en ce que les arêtes, côté écoulement, des nervures (9) forment, avec le plan contraint par l'arête d'étanchéité (10), un angle aigu (13) d'environ 15°.

FIG.1

FIG. 2